(19) Europäisches Patentamt
European Patent Office
Office européen des brevets

(11) **EP 3 618 156 A1**

(12) **EUROPEAN PATENT APPLICATION**
published in accordance with Art. 153(4) EPC

(43) Date of publication:
**04.03.2020 Bulletin 2020/10**

(21) Application number: **18790992.4**

(22) Date of filing: **20.04.2018**

(51) Int Cl.:
***H01M 4/62*** *(2006.01)* ***H01M 4/13*** *(2010.01)*
***H01M 10/0565*** *(2010.01)*

(86) International application number:
**PCT/JP2018/016298**

(87) International publication number:
**WO 2018/198969 (01.11.2018 Gazette 2018/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.04.2017 PCT/JP2017/016199**

(71) Applicant: **Hitachi Chemical Company, Ltd.**
**Chiyoda-ku**
**Tokyo 100-6606 (JP)**

(72) Inventors:
- **NISHIMURA Takuya**
  **Tokyo 100-6606 (JP)**
- **GOGYO Yuma**
  **Tokyo 100-6606 (JP)**
- **KOJIMA Katsunori**
  **Tokyo 100-6606 (JP)**

(74) Representative: **Hoffmann Eitle**
**Patent- und Rechtsanwälte PartmbB**
**Arabellastraße 30**
**81925 München (DE)**

# (54) BATTERY MEMBER FOR SECONDARY BATTERY, SECONDARY BATTERY, AND PRODUCTION METHODS THEREFOR

(57) The present invention provides a battery member for a secondary battery provided with a current collector, an electrode mixture layer disposed on the current collector, an electrolyte layer disposed on the electrode mixture layer in this order, wherein the electrode mixture layer comprises an electrode active material and an ionic liquid, and the porosity of the electrode mixture layer is 10% by volume or less relative to the volume of the electrode mixture layer.

***Fig.2***

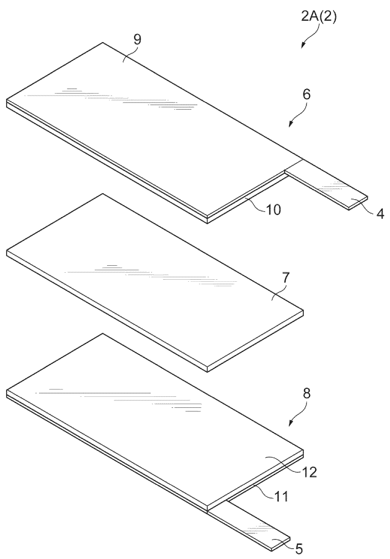


EP 3 618 156 A1

## Description

### Technical Field

The present invention relates to a battery member for secondary battery, a secondary battery, and production methods therefor.

### Background Art

In recent years, portable electronic devices and electric vehicles are in widespread use, and high-performance secondary batteries are therefore required. In particular, lithium secondary batteries are used as a power source of portable electronic devices and electric vehicles due to having a high energy density.

For example, in a 18650-type lithium secondary battery, a rolled electrode body is accommodated inside a cylindrical battery can. The rolled electrode body includes a positive electrode, a negative electrode and a microporous separator sandwiched therebetween, which are wound in a spiral form. Since the separator in the rolled electrode body is impregnated with a flammable electrolyte solution, for example, when the temperature of the battery rises rapidly in abnormal state, the lithium secondary battery may possibly burst due to vaporization of the electrolyte solution to increase the internal pressure, and the electrolyte solution may possibly ignite. Preventing a lithium secondary battery from bursting and igniting is important in designing the lithium secondary battery. In other words, in further planning high energy densification and increase in size of a lithium secondary battery from this time, further improvement in safety is required.

As a drastic solution for improving the safety of a lithium secondary battery, an all-solid-state battery is in under development. In an all-solid-state battery, instead of an electrolyte solution, a layer of a solid electrolyte such as a polymer electrolyte or an inorganic solid electrolyte is provided on an electrode mixture layer (for example, Patent Literature 1).

### Citation List

### Patent Literature

Patent Literature 1: Japanese Unexamined Patent Publication No. 2006-294326

### Summary of Invention

### Technical Problem

However, in the case of using a solid electrolyte, it is more difficult to satisfactorily form an interface with an electrode mixture layer as compared to the case of using an electrolyte solution. The contact area between the electrode mixture layer and the solid electrolyte is therefore reduced, and, for example, the discharge characteristic of a secondary battery may be remarkably reduced.

An object in an aspect of the present invention is, therefore, to provide a battery member capable of improving the discharge characteristic of a secondary battery, and a production method therefor. An object in another aspect of the present invention is to provide a secondary battery excellent in discharge characteristic and a production method therefor.

### Solution to Problem

A first aspect of the present invention relates to a battery member for a secondary battery comprising a current collector, an electrode mixture layer disposed on the current collector, and an electrolyte layer disposed on the electrode mixture layer in this order, wherein the electrode mixture layer comprises an electrode active material and an ionic liquid, and the porosity of the electrode mixture layer is 10% by volume or less relative to the volume of the electrode mixture layer.

The electrode mixture layer may be a positive electrode mixture layer or a negative electrode mixture layer. The electrode active material may be a positive electrode active material or a negative electrode active material.

A second aspect of the present invention relates to a secondary battery comprising: a positive electrode comprising a first current collector, and a positive electrode mixture layer disposed on the first current collector and comprising a positive electrode active material and an ionic liquid; a negative electrode comprising a second current collector, and a negative electrode mixture layer disposed on the second current collector and comprising a negative electrode active material and an ionic liquid; and an electrolyte layer disposed between the positive electrode and the negative electrode; wherein the porosity of the positive electrode mixture layer is 10% by volume or less relative to the volume of the positive

electrode mixture layer, and the porosity of the negative electrode mixture layer is 10% by volume or less relative to the volume of the positive electrode mixture layer or the negative electrode mixture layer.

In the first and the second aspects, preferably the ionic liquid comprises at least one selected from the group consisting of $N(C_4F_9SO_2)_2^-$, $CF_3SO_3^-$, $N(SO_2F)_2^-$, $N(SO_2CF_3)_2^-$ and $N(SO_2CF_2CF_3)_2^-$, as an anionic component.

In the first and the second aspects, preferably the ionic liquid comprises at least one selected from the group consisting of a quaternary onium cation in a chain form, a piperidinium cation, a pyrrolidinium cation, a pyridinium cation, and an imidazolium cation, as a cationic component.

In the first and the second aspects, preferably the electrolyte layer comprises a polymer, oxide particles, an ionic liquid, and at least one electrolyte salt selected from the group consisting of a lithium salt, a sodium salt, a calcium salt and a magnesium salt.

In the first and the second aspects, preferably the electrolyte salt is at least one selected from the group consisting of an imide lithium salt, an imide sodium salt, an imide calcium salt and an imide magnesium salt.

In the first and the second aspects, preferably the content of the oxide particles is 5 to 40 mass% based on the total amount of the electrolyte layer.

In the first and the second aspects, the average particle diameter of the oxide particles is preferably 0.005 to 5 $\mu$m.

In the first and the second aspects, the content of the polymer is preferably 3 to 40 mass% based on the total amount of the electrolyte layer.

In the first and the second aspects, preferably the polymer comprises a first structural unit selected from the group consisting of tetrafluoroethylene and vinylidene fluoride.

In the first and the second aspects, the polymer comprises preferably one or two or more polymers, and the first structural unit and a second structural unit selected from the group consisting of hexafluoropropylene, acrylic acid, maleic acid, ethyl methacrylate, and methyl methacrylate are included in structural units constituting the one or two or more polymers.

A third aspect of the present invention relates to a production method for battery members for secondary batteries comprising: forming an electrode mixture layer containing an electrode active material and an ionic liquid on a current collector to obtain an electrode, and disposing an electrolyte layer opposite to the current collector of the electrode, wherein the porosity of the electrode mixture layer is controlled to 10% by volume or less relative to the volume of the electrode mixture layer.

A fourth aspect of the present invention relates to a production method for secondary batteries comprising: forming a positive electrode mixture layer comprising a positive electrode active material and an ionic liquid on a first current collector to obtain a positive electrode, forming a negative electrode mixture layer containing a negative electrode active material and an ionic liquid on a second current collector to obtain a negative electrode, and disposing an electrolyte layer between the positive electrode and the negative electrode in such a way that the electrolyte layer positioned on the positive electrode mixture layer side of the positive electrode and on the negative electrode mixture layer side of the negative electrode, wherein the porosity of the positive electrode mixture layer is controlled to 10% by volume or less relative to the volume of the positive electrode mixture layer, and the porosity of the negative electrode mixture layer is controlled to 10% by volume or less relative to the volume of the negative electrode mixture layer.

**Advantageous Effects of Invention**

According to an aspect of the present invention, a battery member capable of improving the discharge characteristic of a secondary battery and a production method therefor can be provided. Further, according to another aspect of the present invention, a secondary battery excellent in discharge characteristic and a production method therefor can be provided.

**Brief Description of Drawings**

Figure 1 is a perspective view showing a secondary battery in a first embodiment.

Figure 2 is an exploded perspective view showing an electrode group of the secondary battery shown in Figure 1.

Figure 3 (a) is a schematic cross-sectional view showing a battery member (positive electrode member) for a secondary battery in an embodiment, and Figure 3 (b) is a schematic cross-sectional view showing a battery member (negative electrode member) for a secondary battery in another embodiment.

Figure 4 is an exploded perspective view showing an electrode group of a secondary battery in a second embodiment.

Figure 5 is a schematic cross-sectional view showing a battery member (bipolar electrode member) for a secondary battery in another embodiment.

## Description of Embodiments

With appropriate reference to drawings, embodiments of the present invention will be described in detail below. The present invention, however, is not limited to the following embodiments. In the following embodiments, the constitutional elements (including steps or the like) thereof are not essential except for particularly specified cases. The sizes of the constitutional elements shown in each of the drawings are conceptual and relative relations of sizes among the constitutional elements are not limited to those shown in each of the drawings.

Numerical values and numerical ranges in the present specification do not limit the present invention. A numerical range represented by using "to" in the present specification represents a range including the numerical values described at the front or rear of "to" as the minimum value or the maximum value. In the numerical range stepwise described in the present specification, an upper limit or a lower limit of the numerical range in a step may be replaced with an upper limit or a lower limit of the numerical range in another step. Also, an upper limit or a lower limit in the numerical range described in the present specification may be replaced with the values shown in Examples.

[First embodiment]

Figure 1 is a perspective view showing a secondary battery in a first embodiment. As shown in Figure 1, a secondary battery 1 is provided with an electrode group 2 comprising a positive electrode, a negative electrode and an electrolyte layer, and a bag-shaped battery outer package 3 accommodating the electrode group 2. The positive electrode and the negative electrode are provided with a positive electrode current collection tab 4 and a negative electrode current collection tab 5, respectively. The positive electrode current collection tab 4 and the negative electrode current collection tab 5 protrude from the inside to the outside of the battery outer package 3, such that the positive electrode and the negative electrode can be electrically connected to the outside of the secondary battery 1, respectively.

The battery outer package 3 may be formed of, for example, a laminate film. The laminate film may be, for example, a laminate film of a resin film such as polyethylene terephthalate (PET) film, a foil of metal such as aluminum, copper and stainless steel, and a sealant layer of polypropylene or the like, which are stacked in this order.

Figure 2 is an exploded perspective view showing an electrode group 2 of the secondary battery 1 shown in Figure 1 in an embodiment. As shown in Figure 2, an electrode group 2A is provided with a positive electrode 6, an electrolyte layer 7 and a negative electrode 8 in this order. The positive electrode 6 is provided with a current collector 9 and a positive electrode mixture layer 10 disposed on the current collector 9. The current collector 9 of the positive electrode 6 is provided with a positive electrode current collection tab 4. The negative electrode 8 is provided with a current collector 11 and a negative electrode mixture layer 12 disposed on the current collector 11. The current collector 11 of the negative electrode 8 is provided with a negative electrode current collection tab 5. Incidentally, the positive electrode mixture layer 10 and the negative electrode mixture layer 12 are collectively referred to as electrode mixture layer. Similarly, the positive electrode active material and the negative electrode active material described below are collectively referred to as electrode active material.

In an embodiment, it can be regarded that in an electrode group 2A, a first battery member (positive electrode member) provided with a first current collector 9, a positive electrode mixture layer 10 and an electrolyte layer 7 in this order is included. Figure 3 (a) is a schematic cross-sectional view showing the first battery member (positive electrode member). As shown in Figure 3 (a), the first battery member 13 is a positive electrode member provided with a first current collector 9, a positive electrode mixture layer 10 disposed on the first current collector 9, and an electrolyte layer 7 disposed on the positive electrode mixture layer 10 in this order.

The first current collector 9 may be formed of a metal such as aluminum, titanium and tantalum or an alloy thereof. The first current collector 9 is preferably formed of aluminum or an alloy thereof, having light weight with a high weight energy density.

In an embodiment, the positive electrode mixture layer 10 contains a positive electrode active material and an ionic liquid. The positive electrode active material may be a lithium transition metal compound such as a lithium transition metal oxide and a lithium transition metal phosphate.

The lithium transition metal oxide may be, for example, lithium manganate, lithium nickelate and lithium cobaltate. The lithium transition metal oxide may be a lithium transition metal oxide comprising a part of transition metals such as Mn, Ni and Co contained in lithium manganate, lithium nickelate, and lithium cobaltate, replaced with one or two or more other transition metals or metal elements such as Mg and Al (typical element). In other words, the lithium transition metal oxide may be a compound represented by $LiM^1O_2$ or $LiM^1O_4$, wherein $M^1$ comprises at least one transition metal. Specifically, the lithium transition metal oxide may be $Li(Co_{1/3}Ni_{1/3}Mn_{1/3})O_2$, $LiNi_{1/2}Mn_{1/2}O_2$, $LiNi_{1/2}Mn_{3/2}O_4$ or the like.

The lithium transition metal oxide is preferably a compound represented by the following formula (1), from the viewpoint of further improving the energy density:

$$Li_aNi_bCo_cM^2_dO_{2+e} \qquad (1)$$

wherein $M^2$ is at least one selected from the group consisting of Al, Mn, Mg and Ca, and a, b, c, d and e are numbers satisfying $0.2 \leq a \leq 1.2$, $0.5 \leq b \leq 0.9$, $0.1 \leq c \leq 0.4$, $0 \leq d \leq 0.2$, $-0.2 \leq e \leq 0.2$ and b+c+d=1.

The lithium transition metal phosphate may be $LiFePO_4$, $LiMnPO_4$, $LiMn_xM^3_{1-x}PO_4$ or the like, wherein $0.3 \leq x \leq 1$, and $M^3$ is at least one element selected from the group consisting of Fe, Ni, Co, Ti, Cu, Zn, Mg and Zr.

The content of the positive electrode active material may be 70 mass% or more, 80 mass% or more, or 90 mass% or more, based on the total amount of the positive electrode mixture layer. The content of the positive electrode active material may be 99 mass% or less based on the total amount of the positive electrode mixture layer.

The ionic liquid contains the following anionic components and cationic components. Incidentally, the ionic liquid in the present specification is a material in a liquid state at -20°C or more.

The anionic components of the ionic liquid are not particularly limited, and may be halogen anions such as $Cl^-$, $Br^-$ and $I^-$, inorganic anions such as $BF_4^-$ and $N(SO_2F)_2^-$, or organic anions such as $B(C_6H_5)_4^-$, $CH_3SO_3^-$, $CF_3SO_3^-$, $N(C_4F_9SO_2)_2^-$, $N(SO_2CF_3)_2^-$ and $N(SO_2CF_2CF_3)_2^-$. The anionic components of the ionic liquid contain preferably at least one selected from the group consisting of $B(C_6H_5)_4^-$, $CH_3SO_3^-$, $N(C_4F_9SO_2)_2^-$, $CF_3SO_3^-$, $N(SO_2F)_2^-$, $N(SO_2CF_3)_2^-$ and $N(SO_2CF_2CF_3)_2^-$ to further improve the ionic conductivity at relatively low viscosity, and also from the viewpoint of further improving the charge-discharge characteristic, more preferably at least one selected from the group consisting of $N(C_4F_9SO_2)_2^-$, $CF_3SO_3^-$, $N(SO_2F)_2^-$, $N(SO_2CF_3)_2^-$ and $N(SO_2CF_2CF_3)_2^-$, still more preferably $N(SO_2F)_2^-$.

The cationic components of the ionic liquid are not particularly limited and preferably at least one selected from the group consisting of a quaternary onium cation in a chain form, a piperidinium cation, a pyrrolidinium cation, a pyridinium cation, and an imidazolium cation.

The quaternary onium cation in a chain form is, for example, a compound represented by the following formula (2):

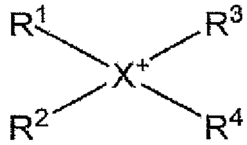
(2)

wherein $R^1$ to $R^4$ each independently represent an alkyl group in a chain form having 1 to 20 carbon atoms, or an alkoxyalkyl group in a chain form represented by $R-O-(CH_2)_n-$, wherein R represents a methyl group or an ethyl group and n represents an integer of 1 to 4; X represents a nitrogen atom or a phosphorus atom, and the number of carbon atoms of the alkyl group represented by $R^1$ to $R^4$ is preferably 1 to 20, more preferably 1 to 10, still more preferably 1 to 5.

The piperidinium cation is, for example, a six-membered ring compound containing nitrogen represented by the following formula (3):

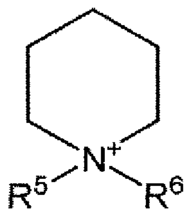
(3)

wherein $R^5$ and $R^6$ each independently represent an alkyl group having 1 to 20 carbon atoms, or an alkoxyalkyl group represented by $R-O-(CH_2)_n-$, wherein R represents a methyl group or an ethyl group and n represents an integer of 1 to 4; and the number of carbon atoms of the alkyl group represented by $R^5$ and $R^6$ is preferably 1 to 20, more preferably 1 to 10, still more preferably 1 to 5.

The pyrrolidinium cation is, for example, a five-membered ring compound represented by the following formula (4):

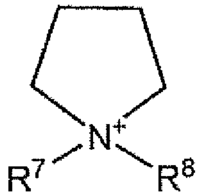
(4)

wherein $R^7$ and $R^8$ each independently represent an alkyl group having 1 to 20 carbon atoms, or an alkoxyalkyl group represented by $R\text{-}O\text{-}(CH_2)_n\text{-}$, wherein R represents a methyl group or an ethyl group, and n represents an integer of 1 to 4; and the number of carbon atoms of the alkyl group represented by $R^7$ and $R^8$ is preferably 1 to 20, more preferably 1 to 10, still more preferably 1 to 5.

The pyridinium cation is, for example, a compound represented by the following formula (5):

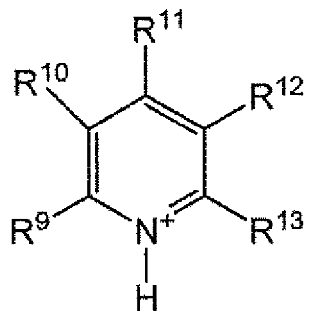

(5)

wherein $R^9$ to $R^{13}$ each independently represent an alkyl group having 1 to 20 carbon atoms, an alkoxyalkyl group represented by $R\text{-}O\text{-}(CH_2)_n\text{-}$, or a hydrogen atom, wherein R represents a methyl group or an ethyl group, and n represents an integer of 1 to 4; and the number of carbon atoms of the alkyl group represented by $R^9$ to $R^{13}$ is preferably 1 to 20, more preferably 1 to 10, still more preferably 1 to 5.

The imidazolium cation is, for example, a compound represented by the following formula (6):

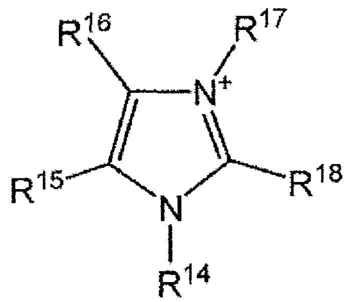

(6)

wherein $R^{14}$ to $R^{18}$ each independently represent an alkyl group having 1 to 20 carbon atoms, an alkoxyalkyl group represented by $R\text{-}O\text{-}(CH_2)_n\text{-}$, or a hydrogen atom, wherein R represents a methyl group or an ethyl group, and n represents an integer of 1 to 4; and the number of carbon atoms of the alkyl group represented by $R^{14}$ to $R^{18}$ is preferably 1 to 20, more preferably 1 to 10, still more preferably 1 to 5.

The content of the ionic liquid in the positive electrode mixture layer 10 is preferably 3 mass% or more, more preferably 5 mass% or more, still more preferably 10 mass% or more, based on the total amount of the positive electrode mixture layer. The content of the ionic liquid in the positive electrode mixture layer 10 is preferably 30 mass% or less, more preferably 25 mass% or less, still more preferably 20 mass% or less, based on the total amount of the positive electrode mixture layer.

The positive electrode mixture layer 10 may further contain a conductive agent, a binder or the like.

The conductive agent is not particularly limited, and may be a carbon material such as graphite, acetylene black, carbon black and carbon fiber. The conductive agent may be a mixture of a plurality of the carbon materials described above.

The content of the conductive agent may be 0.1 mass% or more, 1 mass% or more, or 3 mass% or more, and 15 mass% or less, 10 mass% or less, or 8 mass% or less, based on the total amount of the positive electrode mixture layer.

The binder is not particularly limited, and may be a polymer containing at least one selected from the group consisting of tetrafluoroethylene, vinylidene fluoride, hexafluoropropylene, acrylic acid, maleic acid, ethyl methacrylate, and methyl methacrylate as a monomer unit, a rubber such as styrene-butadiene rubber, isoprene rubber and acrylic rubber, or the like. The binder is preferably a copolymer containing tetrafluoroethylene and vinylidene fluoride as structural units.

An electrolyte salt may be dissolved in the ionic liquid contained in the positive electrode mixture layer 10. The electrolyte salt may be at least one selected from the group consisting of a lithium salt, a sodium salt, a calcium salt and a magnesium salt.

The anion of the electrolyte salt may be a halide ion ($I^-$, $Cl^-$, $Br^-$ or the like), $SCN^-$, $BF_4^-$, $BF_3(CF_3)^-$, $BF_3(C_2F_5)^-$

, $PF_6^-$, $ClO_4^-$, $SbF_6^-$, $N(SO_2F)_2^-$, $N(SO_2CF_3)_2^-$, $N(SO_2C_2F_5)_2^-$, $BPh_4^-$, $B(C_2H_4O_2)_2^-$, $C(FSO_2)_3^-$, $C(CF_3SO_2)_3^-$, $CF_3COO^-$, $CF_3SO_2O^-$, $C_6F_5SO_2O^-$, $[B(C_2O_4)_2]^-$ or the like. The anion is preferably $PF_6^-$, $BF_4^-$, $N(SO_2F)_2^-$, $N(SO_2CF_3)_2^-$, $[B(C_2O_4)_2]^-$, or $ClO_4^-$.

Incidentally, the following abbreviations may be used below:

[FSI]$^-$: $N(SO_2F)_2^-$, bis(fluorosulfonyl)imide anion
[TFSI]$^-$: $N(SO_2CF_3)_2^-$, bis(trifluoromethanesulfonyl)imide anion
[BOB]$^-$: $[B(C_2O_4)_2]^-$, bis(oxalate)borate anion
[f3C]$^-$: $C(FSO_2)_3^-$, tris(fluorosulfonyl)carbanion

The lithium salt may be at least one selected from the group consisting of $LiPF_6$, $LiBF_4$, Li[FSI], Li[TFSI], Li[f3C], Li[BOB], $LiClO_4$, $LiCF_3BF_3$, $LiC_2F_5BF_3$, $LiC_3F_7BF_3$, $LiC_4F_9BF_3$, $Li[C(SO_2CF_3)_3]$, $LiCF_3SO_3$, $LiCF_3COO$, and LiRCOO, wherein R is an alkyl group having 1 to 4 carbon atoms, a phenyl group, or a naphthyl group.

The sodium salt may be at least one selected from the group consisting of $NaPF_6$, $NaBF_4$, Na[FSI], Na[TFSI], Na[f3C], Na[BOB], $NaClO_4$, $NaCF_3BF_3$, $NaC_2F_5BF_3$, $NaC_3F_7BF_3$, $NaC_4F_9BF_3$, $Na[C(SO_2CF_3)_3]$, $NaCF_3SO_3$, $NaCF_3COO$, and NaRCOO, wherein R is an alkyl group having 1 to 4 carbon atoms, a phenyl group, or a naphthyl group.

The calcium salt may be at least one selected from the group consisting of $Ca(PF_6)_2$, $Ca(BF_4)_2$, $Ca[FSI]_2$, $Ca[TFSI]_2$, $Ca[f3C]_2$, $Ca[BOB]_2$, $Ca(ClO_4)_2$, $Ca(CF_3BF_3)_2$, $Ca(C_2F_5BF_3)_2$, $Ca(C_3F_7BF_3)_2$, $Ca(C_4F_9BF_3)_2$, $Ca[C(SO_2CF_3)_3]_2$, $Ca(CF_3SO_3)_2$, $Ca(CF_3COO)_2$, and $Ca(RCOO)_2$, wherein R is an alkyl group having 1 to 4 carbon atoms, a phenyl group, or a naphthyl group.

The magnesium salt may be at least one selected from the group consisting of $Mg(PF_6)_2$, $Mg(BF_4)_2$, $Mg[FSI]_2$, $Mg[TFSI]_2$, $Mg[f3C]_2$, $Mg[BOB]_2$, $Mg(ClO_4)_2$, $Mg(CF_3BF_3)_2$, $Mg(C_2F_5BF_3)_2$, $Mg(C_3F_7BF_3)_2$, $Mg(C_4F_9BF_3)_2$, $Mg[C(SO_2CF_3)_3]_2$, $Mg(CF_3SO_3)_2$, $Mg(CF_3COO)_2$, and $Mg(RCOO)_2$, wherein R is an alkyl group having 1 to 4 carbon atoms, a phenyl group, or a naphthyl group.

Among these, from the viewpoints of dissociation properties and electrochemical stability, the electrolyte salt is preferably at least one selected from the group consisting of $LiPF_6$, $LiBF_4$, Li[FSI], Li[TFSI], Li[f3C], Li[BOB], $LiClO_4$, $LiCF_3BF_3$, $LiC_2F_5BF_3$, $LiC_3F_7BF_3$, $LiC_4F_9BF_3$, $Li[C(SO_2CF_3)_3]$, $LiCF_3SO_3$, $LiCF_3COO$, and LiRCOO, wherein R represents an alkyl group having 1 to 4 carbon atoms, a phenyl group, or a naphthyl group; more preferably at least one selected from the group consisting of Li[TFSI], Li[FSI], $LiPF_6$, $LiBF_4$, Li[BOB] and $LiClO_4$, still more preferably at least one selected from the group consisting of Li[TFSI] and Li[FSI].

The thickness of the positive electrode mixture layer 10 may be 10 μm or more, 15 μm or more, or 20 μm or more. The thickness of the positive electrode mixture layer may be 100 μm or less, 80 μm or less, or 70 μm or less.

The porosity of the positive electrode mixture layer 10 is 10% by volume or less, preferably 5% by volume or less, more preferably 3% by volume or less, still more preferably 1% by volume or less, relative to the volume of the positive electrode mixture layer. The porosity of the positive electrode mixture layer is preferably 0.1% by volume or more relative to the volume of the positive electrode mixture layer. With a volume of pores in the positive electrode mixture layer in the range, the interface between the ionic liquid and other compounds is formed in good condition to reduce the internal resistance of the battery, so that excellent discharge characteristic can be obtained when the positive electrode member is applied to a secondary battery.

The porosity is measured by a mercury intrusion method. The conditions of mercury porosimetry in the mercury intrusion method are as shown below.

Apparatus: AutoPore IV 9500, manufactured by Shimadzu Corporation
Surface tension of mercury: 475 dynes/cm
Density of mercury: 13.534 g/mL

The electrolyte layer 7 contains, for example, a polymer, oxide particles, an ionic liquid, and at least one electrolyte salt selected from the group consisting of a lithium salt, a sodium salt, a calcium salt and a magnesium salt.

The polymer has a first structural unit preferably selected from the group consisting of tetrafluoroethylene and vinylidene fluoride.

The polymer contains preferably one or two or more polymers, and in the structural units constituting the polymers, the first structural unit and a second structural unit selected from the group consisting of hexafluoropropylene, acrylic acid, maleic acid, ethyl methacrylate, and methyl methacrylate may be contained. In other words, the first structural unit and the second structural unit may be contained in a polymer to constitute a copolymer, or may be contained in separate polymers, respectively, to constitute at least two polymers including a first polymer containing the first structural unit and a second polymer containing the second structural unit.

Specifically, the polymer may be polytetrafluoroethylene, polyvinylidene fluoride, a copolymer of vinylidene fluoride and hexafluoropropylene, or the like.

The content of the polymer is preferably 3 mass% or more based on the total amount of the electrolyte layer. The content of the polymer is preferably 50 mass% or less, more preferably 40 mass% or less, based on the total amount

of the electrolyte layer. The content of the polymer is preferably 3 to 50 mass% or 3 to 40 mass% based on the total amount of the electrolyte layer.

The oxide particles are, for example, oxide particles of a metal selected from the group consisting of Li, Na, Mg, Al, Si, K, Ca, Sc, Ti, V, Cr, Mn, Fe, Co, Ni, Cu, Zn, Rb, Sr, Y, Nb, Zr, Mo, Ag, Cd, In, Sn, Sb, Cs, Ba, La, Ta, Hf, W, Ir, Tl, Pb and Bi. Specifically, the oxide particles may be silicon oxide, titanium oxide, zinc oxide, aluminum oxide, zirconium oxide, hafnium oxide, niobium oxide, tantalum oxide, magnesium oxide, calcium oxide, strontium oxide, barium oxide, indium oxide, lead oxide or the like.

The oxide particles may be oxides of rare earth metals. Specifically, the oxide particles may be scandium oxide, yttrium oxide, lanthanum oxide, cerium oxide, praseodymium oxide, neodymium oxide, samarium oxide, europium oxide, gadolinium oxide, terbium oxide, dysprosium oxide, holmium oxide, erbium oxide, thulium oxide, ytterbium oxide, lutetium oxide or the like. From the viewpoint of further improving the ion conductivity, the oxide particles are preferably iron oxide, zirconium oxide, tin oxide, tungsten oxide, titanium oxide, silicon oxide, zinc oxide, or aluminum oxide.

The average particle diameter of the oxide particles is preferably 0.005 $\mu$m or more, more preferably 0.01 $\mu$m or more, still more preferably 0.05 $\mu$m or more. The average particle diameter of the oxide particles is preferably 5 $\mu$m or less, more preferably 3 $\mu$m or less, still more preferably 1 $\mu$m or less. The average particle diameter of the oxide particles is preferably 0.005 to 5 $\mu$m, 0.01 to 3 $\mu$m, or 0.05 to 1 $\mu$m. The average particle diameter of the oxide particles is measured by a laser diffraction method, corresponding to the particle diameter at which the cumulative volume reaches 50% in a volume cumulative particle size distribution curve drawn from the small particle diameter side.

The content of the oxide particles is preferably 5 mass% or more, more preferably 10 mass% or more, still more preferably 15 mass% or more, particularly preferably 20 mass% or more, and preferably 60 mass% or less, more preferably 50 mass% or less, still more preferably 40 mass% or less, based on the total amount of the electrolyte layer. The content of the oxide particles is preferably 5 to 60 mass%, 10 to 60 mass%, 15 to 60 mass%, 20 to 60 mass%, 5 to 50 mass%, 10 to 50 mass%, 15 to 50 mass%, 20 to 50 mass%, 5 to 40 mass%, 10 to 40 mass%, 15 to 40 mass%, or 20 to 40 mass%.

The ionic liquid contained in the electrolyte layer 7 may be the same as the ionic liquid contained in the positive electrode mixture layer described above.

The content of the ionic liquid in the electrolyte layer 7 is preferably 25 mass% or more, more preferably 30 mass% or more, still more preferably 40 mass% or more, based on the total amount of the electrolyte layer. The content of the ionic liquid in the electrolyte layer 7 may be 80 mass% or less based on the total amount of the electrolyte layer, and is preferably 70 mass% or less, more preferably 65 mass% or less, still more preferably 60 mass% or less.

The electrolyte salt contained in the electrolyte layer 7 may be the same as the electrolyte salt described above, and may be at least one selected from the group consisting of a lithium salt, a sodium salt, a calcium salt and a magnesium salt. The electrolyte salt is preferably at least one selected from the group consisting of an imide lithium salt, an imide sodium salt, an imide calcium salt, and an imide magnesium salt.

The imide lithium salt may be Li[TFSI], Li[FSI] or the like. The imide sodium salt may be Na[TFSI], Na [FSI] or the like. The imide calcium salt may be $Ca[TFSI]_2$, $Ca[FSI]_2$ or the like. The imide magnesium salt may be $Mg[TFSI]_2$, $Mg[FSI]_2$ or the like.

In the electrolyte layer 7, the concentration of the electrolyte salt per unit volume of the ionic liquid is preferably 0.5 mol/L or more, more preferably 0.7 mol/L or more, still more preferably 0.8 mol/L or more, and preferably 2.0 mol/L or less, more preferably 1.8 mol/L or less, still more preferably 1.5 mol/L or less, from the viewpoint of further improving the charge-discharge characteristic.

The thickness of the electrolyte layer 7 is preferably 5 $\mu$m or more, more preferably 10 $\mu$m or more, from the viewpoint of enhancing strength to improve safety. The thickness of the electrolyte layer 7 is preferably 200 $\mu$m or less, more preferably 150 $\mu$m or less, still more preferably 100 $\mu$m or less, from the viewpoints of further reducing the internal resistance of the secondary battery and further improving the large current characteristic.

In another embodiment, it can be also regarded that in an electrode group 2A, a second battery member (negative electrode member) provided with a second current collector 11, a negative electrode mixture layer 12 and an electrolyte layer 7 in this order is included. Figure 3 (b) is a schematic cross-sectional view showing a second battery member (negative electrode member). As shown in Figure 3 (b), the second battery member is a negative electrode member provided with a second current collector 11, a negative electrode mixture layer 12 disposed on the second current collector 11, and a electrolyte layer 7 disposed on the negative electrode mixture layer 12 in this order. Since the electrolyte layer 7 is the same as the electrolyte layer 7 in the first battery member 13 described above, the explanation thereof is omitted below.

The second current collector 11 may be a metal such as aluminum, copper, nickel and stainless steel or an alloy thereof. The second current collector 11 is preferably aluminum or an alloy thereof, having light weight with a high weight energy density. The second current collector 11 is preferably copper, from the viewpoints of easiness in processing into a thin film and cost.

In an embodiment, the negative electrode mixture layer 12 contains a negative electrode active material and

an ionic liquid. The negative electrode active material may be a carbon material such as graphite and amorphous carbon, a metal material including tin, silicon or the like, lithium titanate ($Li_4Ti_5O_{12}$), metal lithium or the like.

The content of the negative electrode active material may be 60 mass% or more, 65 mass% or more, or 70 mass% or more, based on the total amount of the negative electrode mixture layer. The content of the negative electrode active material may be 99 mass% or less, 95 mass% or less, or 90 mass% or less, based on the total amount of the negative electrode mixture layer.

The ionic liquid contained in the negative electrode mixture layer 12 may be the same as the ionic liquid contained in the positive electrode mixture layer 10 described above.

The content of the ionic liquid in the negative electrode mixture layer 12 is preferably 3 mass% or more, more preferably 5 mass% or more, still more preferably 10 mass% or more, based on the total amount of the negative electrode mixture layer. The content of the ionic liquid in the negative electrode mixture layer 12 is preferably 30 mass% or less, more preferably 25 mass% or less, still more preferably 20 mass% or less, based on the total amount of the negative electrode mixture layer.

The negative electrode mixture layer 12 may further contain the conductive agent, the binder or the like usable in the positive electrode mixture layer 10 described above.

In the ionic liquid contained in the negative electrode mixture layer 12, the same electrolyte salt as the electrolyte salt usable in the positive electrode mixture layer 10 may be dissolved.

The thickness of the negative electrode mixture layer 12 may be 10 $\mu$m or more, 15 $\mu$m or more, or 20 $\mu$m or more. The thickness of the negative electrode mixture layer may be 60 $\mu$m or less, 55 $\mu$m or less, or 50 $\mu$m or less.

The porosity of the negative electrode mixture layer 12 is 10% by volume or less, preferably 5% by volume or less, more preferably 3% by volume or less, still more preferably 1% by volume or less, relative to the volume of the negative electrode mixture layer. The porosity of the negative electrode mixture layer 12 is preferably 0.1% by volume or more relative to the volume of the negative electrode mixture layer. With a volume of pores in the negative electrode mixture layer in the range, the interface between the ionic liquid and other compounds is formed in good condition to reduce the internal resistance of the battery, so that excellent discharge characteristic can be obtained when the negative electrode member is applied to a secondary battery.

Subsequently, a production method for the secondary battery 1 is described below. In a first embodiment, the production method for the secondary battery 1 comprises a first step of forming a positive electrode mixture layer 10 on a first current collector 9 to obtain a positive electrode 6, a second step of forming a negative electrode mixture layer 12 on a second current collector 11 to obtain a negative electrode 8, and a third step of disposing an electrolyte layer 7 between the positive electrode 6 and the negative electrode 8.

In the first step, the positive electrode can be obtained by, for example, dispersing a material for use in the positive electrode mixture layer in a dispersion medium to obtain a slurry-like positive electrode mixture, then applying the positive electrode mixture to the first current collector 9 and drying the positive electrode mixture. The dispersion medium is preferably an organic solvent such as n-methyl-2-pyrrolidone. In the case where an electrolyte salt and an ionic liquid are contained in the positive electrode mixture layer 10, the electrolyte salt may be dissolved in the ionic liquid and then dispersed in the dispersion medium together with other materials. The method of applying the positive electrode mixture to the first current collector 9 may be, for example, a known method such as coating using an applicator, metal mask printing, electrostatic coating, dip coating, spray coating, roll coating, gravure coating, and screen printing.

In the positive electrode mixture layer 10, the mixing ratio of a positive electrode active material, a conductive agent, a binder, and an ionic liquid dissolving an electrolyte salt may be, for example, positive electrode active material/conductive agent/binder/ionic liquid dissolving electrolyte salt=69 to 82/3 to 10/1 to 12/10 to 17 (mass ratio). The ratio, however, is not necessarily limited to the range.

In the first step, the method of drying the positive electrode mixture applied to the first current collector 9 may be a method using an infrared heater, hot air or the like, and these methods may be used singly or in combination. In drying, after drying using an infrared heater, hot air or the like, the positive electrode may be placed under vacuum for further drying. After drying, the positive electrode is subjected to a pressure treatment by flat plate pressing, a calendar rolling or the like, so that the porosity of the positive electrode mixture layer 10 can be controlled to 10% by volume or less. More specifically, for example, by pressing with a predetermined gap using a roll pressing machine capable of gap adjustment, the thickness of the positive electrode mixture layer 10 is adjusted, so that the porosity of the positive electrode mixture layer 10 can be controlled to 10% by volume or less. In the pressing treatment, the pressed part may be heated. By heating the pressed part, for example, the binder in the positive electrode mixture is softened, so that adjustment of the porosity becomes easy.

In the second step, the negative electrode is obtained by the same method as in the first step described above. In other words, the negative electrode is obtained by dispersing the material for use in the negative electrode mixture layer 12 in a dispersion medium to obtain a slurry-like negative electrode mixture, then applying the negative electrode mixture to the second current collector 11 and drying the mixture.

In the negative electrode mixture layer 12, the mixing ratio of a negative electrode active material, a conductive

agent, a binder, and an ionic liquid dissolving an electrolyte salt may be, for example, negative electrode active material/conductive agent/binder/ionic liquid dissolving electrolyte salt=69 to 82/3 to 10/1 to 12/10 to 17 (mass ratio). The ratio, however, is not necessarily limited to the range.

In the second step also, the porosity of the negative electrode mixture layer 12 may be controlled to 10% by volume or less by the same method in the first step.

In an embodiment in the third step, an electrolyte layer 7 is obtained by kneading materials for use in the electrolyte layer 7, then sandwiching the kneaded product between resins of polytetrafluoroethylene or the like in a sheet form, and roll pressing the sandwiched product to obtain an electrolyte layer in a sheet form. In the third step in this case, the positive electrode 6, the electrolyte layer 7, and the negative electrode 8 are stacked, for example, by lamination, so that a secondary battery 1 can be obtained. On this occasion, the stacking is performed such that the electrolyte layer 7 is positioned on the positive electrode mixture layer 10 side of the positive electrode 6 and on the negative electrode mixture layer 12 side of the negative electrode 8, or in other words, such that the first current collector 9, the positive electrode mixture layer 10, the electrolyte layer 7, the negative electrode mixture layer 12 and the second current collector 11 are disposed in this order.

In another embodiment in the third step, an electrolyte layer 7 is formed on at least one of the surface on the positive electrode mixture layer 10 side of the positive electrode 6 and the surface on the negative electrode mixture layer 12 side of the negative electrode 8.

As the method for forming the electrolyte layer 7 on the surface on the positive electrode mixture layer 10 side of the positive electrode 6, the electrolyte layer in a sheet form described above may be stacked on the positive electrode mixture layer 10 side of the positive electrode 6 by lamination. In order to further improve the adhesion between the electrolyte layer 7 and the positive electrode mixture layer 10, after formation of the electrolyte layer 7 on the surface on the positive electrode mixture layer 10 side of the positive electrode 6, a heat treatment or a pressure treatment such as pressing may be performed. Thereby, a first battery member 13 (positive electrode member) provided with the first current collector 9, the positive electrode mixture layer 10 and the electrolyte layer 7 in this order is produced. Subsequently, the electrolyte layer 7 of the first battery member 13 and the negative electrode mixture layer 12 of the negative electrode 8 are brought into contact to make a laminate, so that a secondary battery 1 is obtained.

As the method for forming the electrolyte layer 7 on the surface on the negative electrode mixture layer 12 side of the negative electrode 8, the electrolyte layer in a sheet form described above may be stacked on the negative electrode mixture layer 12 side of the negative electrode 8 by lamination. In order to further improve the adhesion between the electrolyte layer 7 and the negative electrode mixture layer 12, after formation of the electrolyte layer 7 on the surface on the negative electrode mixture layer 12 side of the negative electrode 8, a heat treatment or a pressure treatment such as pressing may be performed. Thereby, a second battery member 14 (negative electrode member) provided with the second current collector 9, the negative electrode mixture layer 12 and the electrolyte layer 7 in this order is produced. Subsequently, the electrolyte layer 7 of the second battery member 14 and the positive electrode mixture layer 10 of the positive electrode 6 are brought into contact to make a laminate, so that a secondary battery 1 is obtained.

In an embodiment, a secondary battery 1 may be also obtained by forming an electrolyte layer 7 on both of the surface on a positive electrode mixture layer 10 side of a positive electrode 6 and the surface on a negative electrode mixture layer 12 side of a negative electrode 8 by the method described above to obtain a first battery member 13 and a second battery member 14, and then stacking both of the battery members such that the electrolyte layers 7 come into contact with each other.

[Second embodiment]

A secondary battery of a second embodiment is described as follows. Figure 4 is an exploded perspective view showing an electrode group of a secondary battery in the second embodiment. In Figure 4, the same symbols as in the first embodiment are used and redundant explanation is omitted. As shown in Figure 4, the point of difference in the secondary battery in the second embodiment from the secondary battery in the first embodiment is that an electrode group 2B is further provided with a bipolar electrode 15. In other words, the electrode group 2B is further provided with a positive electrode 6, a first electrolyte layer 7, a bipolar electrode 15, a second electrolyte layer 7 and a negative electrode 8 in this order.

The bipolar electrode 15 is provided with a third current collector 16, a positive electrode mixture layer 10 disposed on a surface on a negative electrode 8 side of the third current collector 16, and a negative electrode mixture layer 12 disposed on a surface on a positive electrode 6 side of the third current collector 16.

In a secondary battery in the second embodiment, it can be regarded that in an electrode group 2B, a third battery member (bipolar electrode member) provided with a first electrolyte layer 7, a bipolar electrode 15 and a second electrolyte layer 7 in this order is included. Figure 5 is a schematic cross-sectional view showing the third battery member (bipolar electrode member). As shown in Figure5, the third battery member 17 is provided with a third current collector 16, a positive electrode mixture layer 10 disposed on one surface of the third current collector 16, a second electrolyte

layer 7 disposed opposed to the third current collector 16 on the positive electrode mixture layer 10, a negative electrode mixture layer 12 disposed on another surface of the third current collector 16, and a first electrolyte layer 7 disposed opposite to the third current collector 16 on the negative electrode mixture layer 12.

The third current collector 16 is formed of, for example, a single metal such as aluminum, stainless steel and titanium, or a clad material produced by roll bonding aluminum and copper, or stainless steel and copper.

The first electrolyte layer 7 and the second electrolyte layer 7 may be the same or different from each other and are preferably the same as each other.

**Example**

The present invention will be further specifically described below with reference to Examples, though not limited to the following Examples.

[Example 1]

<Preparation of electrolyte layer>

Lithium bis(fluorosulfonyl)imide (Li[FSI]) dried under dry argon atmosphere for use as electrolyte salt was dissolved in N-methyl -N-propylpyrrolidinium bis(fluorosulfonyl)imide (Py13FSI) as an ionic liquid at a concentration of 1 mol/L (hereinafter, a composition of the ionic liquid dissolving an electrolyte salt is described as "concentration of lithium salt/type of lithium salt/type of ionic liquid" in some cases). An ionic liquid dissolving an electrolyte salt as described above and $SiO_2$ particles having an average particle diameter of 0.1 μm were mixed at a volume ratio (ionic liquid dissolving electrolyte salt/$SiO_2$) of 80/20, while stirring in methanol for 30 minutes or more. The mixture was then distilled at 60°C by using an evaporator. The composition obtained by distillation and polytetrafluoroethylene were mixed at a mass ratio (composition/polytetrafluoroethylene) of 95/5 and kneaded with a mortar for 30 minutes or more to obtain an electrolyte composition. The resulting electrolyte composition was sandwiched between two sheets of polytetrafluoroethylene (PTFE) and subjected to pressing by a roll pressing machine to obtain an electrolyte sheet having a thickness of 200 μm. The electrolyte sheet was punched out to a diameter of 16 mm to make an electrolyte layer. In the electrolyte layer, the content of the polytetrafluoroethylene, the content of $SiO_2$ particles and the content of the ionic liquid and the lithium salt in total were 13 mass%, 25 mass% and 62 mass%, respectively, based on the total amount of the electrolyte layer.

<Preparation of positive electrode>

A positive electrode mixture slurry was prepared by mixing 70 parts by mass of a layered lithium-nickel-manganese-cobalt composite oxide (positive electrode active material), 7 parts by mass of acetylene black (conductive agent, average particle diameter of 48 nm, product name: HS-100, manufactured by Denka Co., Ltd.), 9 parts by mass of a copolymer solution (solid content: 12 mass%) of vinylidene fluoride and hexafluoropropylene, and 14 parts by mass of an ionic liquid dissolving an electrolyte salt (1M/Li[FSI]/Py13FSI). The positive electrode mixture slurry was applied to a current collector (aluminum foil having a thickness of 20 μm) at a coating weight 160 $g/m^2$ and dried at 80°C. By pressing the positive electrode with a roll pressing machine capable of gap adjustment, the thickness of the positive electrode mixture layer was adjusted to form a positive electrode mixture layer having a mixture density of 2.82 $g/cm^3$ (porosity: 0.22%). The positive electrode mixture layer was punched out to a diameter of 15 mm to make a positive electrode.

<Preparation of negative electrode>

A negative electrode mixture slurry was prepared by mixing 74 parts by mass of graphite (negative electrode active material, manufactured by Hitachi Chemical Co., Ltd.), 2 parts by mass of acetylene black (conductive agent, average particle diameter of 48 nm, product name: HS-100, manufactured by Denka Co., Ltd.), 10 parts by mass of a copolymer solution (solid content: 12 mass%) of vinylidene fluoride and hexafluoropropylene, and 14 parts by mass of an ionic liquid dissolving an electrolyte salt (1M/Li[FSI]/Py13FSI). The negative electrode mixture slurry was applied to a current collector (copper foil having a thickness of 10 μm) at a coating weight of 90 $g/m^2$ and dried at 80°C. By pressing the negative electrode with a roll pressing machine capable of gap adjustment, the thickness of the negative electrode mixture layer was adjusted to form a negative electrode mixture layer having a mixture density of 2.97 $g/cm^3$ (porosity: 0.64%). The negative electrode mixture layer was punched out to a diameter of 16 mm to make a negative electrode.

<Preparation of coin battery for evaluation>

A coin battery was prepared by using a positive electrode, an electrolyte layer, and a negative electrode. The positive electrode, the electrolyte layer, and the negative electrode were stacked in this order, placed in a CR2032-type coin cell container, and then hermetically enclosed therein by caulking the top of the cell container through an insulating gasket.

[Example 2]

A coin battery was prepared in the same manner as in Example 1, except that by pressing with a roll pressing machine capable of gap adjustment, the thickness of the positive electrode mixture layer was adjusted to control the mixture density of the positive electrode mixture layer to 2.80 $g/cm^3$ (porosity: 0.93%).

[Example 3]

A coin battery was prepared in the same manner as in Example 1, except that by pressing with a roll pressing machine capable of gap adjustment, the thickness of the positive electrode mixture layer was adjusted to control the mixture density of the positive electrode mixture layer to 2.75 $g/cm^3$ (porosity: 2.70%).

[Example 4]

A coin battery was prepared in the same manner as in Example 1, except that by pressing with a roll pressing machine capable of gap adjustment, the thickness of the positive electrode mixture layer was adjusted to control the mixture density of the positive electrode mixture layer to 2.70 $g/cm^3$ (porosity: 4.47%).

[Example 5]

A coin battery was prepared in the same manner as in Example 1, except that by pressing with a roll pressing machine capable of gap adjustment, the thickness of the positive electrode mixture layer was adjusted to control the mixture density of the positive electrode mixture layer to 2.65 $g/cm^3$ (porosity: 6.24%).

[Example 6]

A coin battery was prepared in the same manner as in Example 1, except that by pressing with a roll pressing machine capable of gap adjustment, the thickness of the positive electrode mixture layer was adjusted to control the mixture density of the positive electrode mixture layer to 2.55 $g/cm^3$ (porosity: 9.78%).

[Example 7]

A coin battery was prepared in the same manner as in Example 1, except that by pressing with a roll pressing machine capable of gap adjustment, the thickness of the negative electrode mixture layer was adjusted to control the mixture density of the negative electrode mixture layer to 1.94 $g/cm^3$ (porosity: 2.15%).

[Example 8]

A coin battery was prepared in the same manner as in Example 1, except that by pressing with a roll pressing machine capable of gap adjustment, the thickness of the negative electrode mixture layer was adjusted to control the mixture density of the negative electrode mixture layer to 1.90 $g/cm^3$ (porosity: 4.17%).

[Example 9]

A coin battery was prepared in the same manner as in Example 1, except that by pressing with a roll pressing machine capable of gap adjustment, the thickness of the negative electrode mixture layer was adjusted to control the mixture density of the negative electrode mixture layer to 1.80 $g/cm^3$ (porosity: 9.22%).

[Example 10]

A coin battery was prepared in the same manner as in Example 1, except that 1-ethyl-3-methyl-imidazolium

bis(fluorosulfonyl)imide (EMIFSI) was used as the ionic liquid in preparation of the electrolyte layer in Example 1.

[Example 11]

A coin battery was prepared in the same manner as in Example 1, except that $SiO_2$ particles (average particle diameter: 1.0 μm) were used as the oxide particles in preparation of the electrolyte layer in Example 1.

[Example 12]

A coin battery was prepared in the same manner as in Example 1, except that $SiO_2$ particles (average particle diameter: 3.0 μm) were used as the oxide particles in preparation of the electrolyte layer in Example 1.

[Example 13]

A coin battery was prepared in the same manner as in Example 1, except that $CeO_2$ particles (average particle diameter: 0.02 μm) were used as the oxide particles in preparation of the electrolyte layer in Example 1.

[Example 14]

A coin battery was prepared in the same manner as in Example 1, except that a copolymer of vinylidene fluoride and hexafluoropropylene was used as the polymer in preparation of the electrolyte layer in Example 1.

[Example 15]

A coin battery was prepared in the same manner as in Example 14, except that $CeO_2$ particles (average particle diameter: 0.02 μm) were used as the oxide particles in preparation of the electrolyte layer in Example 14.

[Example 16]

A coin battery was prepared in the same manner as in Example 1, except that polyvinylidene fluoride was used as the polymer in preparation of the electrolyte layer in Example 1.

[Reference Example 1]

A coin battery was prepared in the same manner as in Example 1, except that by pressing with a roll pressing machine capable of gap adjustment, the thickness of the positive electrode mixture layer was adjusted to control the mixture density of the positive electrode mixture layer to 2.40 g/$cm^3$ (porosity: 15.08%).

[Reference Example 2]

A coin battery was prepared in the same manner as in Example 1, except that by pressing with a roll pressing machine capable of gap adjustment, the thickness of the negative electrode mixture layer was adjusted to control the mixture density of the negative electrode mixture layer to 1.65 g/$cm^3$ (porosity: 16.78%).

<Evaluation of discharge characteristic>

The discharge capacity at 25°C of the coin batteries obtained in Examples 1 to 13 was measured by using a charge-discharge unit (manufactured by Toyo System Co., Ltd.) under the following charge-discharge conditions.

(1) One charge-discharge cycle including constant current constant voltage (CCCV) charging to a final voltage of 4.2 V at 0.05 C and subsequent constant current (CC) discharging to a final voltage of 2.7 V at 0.05 C was performed to determine the discharge capacity. Note that C refers to "current value (A)/battery capacity (Ah)".
(2) Subsequently, one charge-discharge cycle including constant current constant voltage (CCCV) charging to a final voltage of 4.2 V at 0.1 C and subsequent constant current (CC) discharging to a final voltage of 2.7 V at 0.5 C was performed to determine the discharge capacity.

From the discharge capacity obtained, the discharge characteristic (%) was calculated from the following equation. It can be said that the larger the value is, the better the discharge characteristic is. The results obtained are shown

in Table 1.

$$\text{Discharge characteristic (\%)} = (\text{discharge capacity determined in (2)} / \text{discharge capacity determined in (1)}) \times 100$$

[Table 1]

| | Porosity of positive electrode mixture layer (% by volume) | Porosity of negative electrode mixture layer (% by volume) | Discharge characteristic (%) |
|---|---|---|---|
| Example 1 | 0.22 | 0.64 | 99 |
| Example 2 | 0.93 | 0.64 | 97 |
| Example 3 | 2.7 | 0.64 | 92 |
| Example 4 | 4.47 | 0.64 | 90 |
| Example 5 | 6.24 | 0.64 | 87 |
| Example 6 | 9.78 | 0.64 | 83 |
| Example 7 | 0.22 | 2.15 | 98 |
| Example 8 | 0.22 | 4.17 | 90 |
| Example 9 | 0.22 | 9.22 | 84 |
| Example 10 | 0.22 | 0.64 | 97 |
| Example 11 | 0.22 | 0.64 | 98 |
| Example 12 | 0.22 | 0.64 | 95 |
| Example 13 | 0.22 | 0.64 | 100 |
| Example 14 | 0.22 | 0.64 | 100 |
| Example 15 | 0.22 | 0.64 | 100 |
| Example 16 | 0.22 | 0.64 | 92 |
| Reference Example 1 | 15.08 | 0.64 | 65 |
| Reference Example 2 | 0.22 | 16.78 | 58 |

**Reference Signs List**

1: secondary battery, 2, 2A, 2B: electrode group, 3: battery outer package, 4: positive electrode current collection tab, 5: negative electrode current collection tab, 6: positive electrode, 7: electrolyte layer, 8: negative electrode, 9: first current collector, 10: positive electrode mixture layer, 11: second current collector, 12: negative electrode mixture layer, 13: first battery member, 14: second battery member, 15: bipolar electrode, 16: third current collector, 17: third battery member

**Claims**

**1.** A battery member for a secondary battery comprising:

a current collector;
an electrode mixture layer disposed on the current collector; and
an electrolyte layer disposed on the electrode mixture layer, in this order,
wherein the electrode mixture layer comprises an electrode active material and an ionic liquid, and

a porosity of the electrode mixture layer is 10% by volume or less relative to the volume of the electrode mixture layer.

**2.** The battery member according to claim 1, wherein the electrode mixture layer is a positive electrode mixture layer, and the electrode active material is a positive electrode active material.

**3.** The battery member according to claim 1, wherein the electrode mixture layer is a negative electrode mixture layer, and the electrode active material is a negative electrode active material.

**4.** The battery member according to any one of claims 1 to 3, wherein the ionic liquid comprises at least one selected from the group consisting of $N(C_4F_9SO_2)_2^-$, $CF_3SO_3^-$, $N(SO_2F)_2^-$ $N(SO_2CF_3)_2^-$ and $N(SO_2CF_2CF_3)_2^-$, as an anionic component.

**5.** The battery member according to any one of claims 1 to 4, wherein the ionic liquid comprises at least one selected from the group consisting of a quaternary onium cation in a chain form, a piperidinium cation, a pyrrolidinium cation, a pyridinium cation, and an imidazolium cation, as a cationic component.

**6.** The battery member according to any one of claims 1 to 5, wherein the electrolyte layer comprises
a polymer,
oxide particles,
an ionic liquid, and
at least one electrolyte salt selected from the group consisting of a lithium salt, a sodium salt, a calcium salt and a magnesium salt.

**7.** The battery member according to claim 6, wherein the electrolyte salt is at least one selected from the group consisting of an imide lithium salt, an imide sodium salt, an imide calcium salt and an imide magnesium salt.

**8.** The battery member according to claim 6 or 7, wherein a content of the oxide particles is 5 to 40 mass% based on the total amount of the electrolyte layer.

**9.** The battery member according to any one of claims 6 to 8, wherein an average particle diameter of the oxide particles is 0.005 to 5 $\mu$m.

**10.** The battery member according to any one of claims 6 to 9, wherein a content of the polymer is 3 to 40 mass% based on the total amount of the electrolyte layer.

**11.** The battery member according to any one of claims 6 to 10, wherein the polymer comprises a first structural unit selected from the group consisting of tetrafluoroethylene and vinylidene fluoride.

**12.** The battery member according to claim 11, wherein the polymer comprises one or two or more polymers, and
the first structural unit and a second structural unit selected from the group consisting of hexafluoropropylene, acrylic acid, maleic acid, ethyl methacrylate, and methyl methacrylate are included in structural units constituting the one or two or more polymers.

**13.** A secondary battery comprising:

a positive electrode comprising

a first current collector, and
a positive electrode mixture layer disposed on the first current collector and comprising a positive electrode active material and an ionic liquid;

a negative electrode comprising

a second current collector, and
a negative electrode mixture layer disposed on the second current collector and comprising a negative electrode active material and an ionic liquid; and

an electrolyte layer disposed between the positive electrode and the negative electrode,
wherein a porosity of the positive electrode mixture layer is 10% by volume or less relative to the volume of the positive electrode mixture layer, and
a porosity of the negative electrode mixture layer is 10% by volume or less relative to the volume of the negative electrode mixture layer.

**14.** The secondary battery according to claim 13, wherein the ionic liquid comprises at least one selected from the group consisting of $N(C_4F_9SO_2)_2^-$, $CF_3SO_3^-$, $N(SO_2F)_2^-$, $N(SO_2CF_3)_2^-$ and $N(SO_2CF_2CF_3)_2^-$, as an anionic component.

**15.** The secondary battery according to claim 13 or 14, wherein the ionic liquid comprises at least one selected from the group consisting of a quaternary onium cation in a chain form, a piperidinium cation, a pyrrolidinium cation, a pyridinium cation, and an imidazolium cation, as a cationic component.

**16.** The secondary battery according to any one of claims 13 to 15, wherein the electrolyte layer comprises
a polymer,
oxide particles,
an ionic liquid, and
at least one electrolyte salt selected from the group consisting of a lithium salt, a sodium salt, a calcium salt and a magnesium salt.

**17.** The secondary battery according to claim 16, wherein the electrolyte salt is at least one selected from the group consisting of an imide lithium salt, an imide sodium salt, an imide calcium salt and an imide magnesium salt.

**18.** The secondary battery according to claim 16 or 17, wherein a content of the oxide particles is 5 to 40 mass% based on the total amount of the electrolyte layer.

**19.** The secondary battery according to any one of claims 16 to 18, wherein an average particle diameter of the oxide particles is 0.005 to 5 μm.

**20.** The secondary battery according to any one of claims 16 to 19, wherein a content of the polymer is 3 to 40 mass% based on the total amount of the electrolyte layer.

**21.** The secondary battery according to any one of claims 16 to 20, wherein the polymer comprises a first structural unit selected form the group consisting of tetrafluoroethylene and vinylidene fluoride.

**22.** The secondary battery according to claim 21, wherein the polymer comprises one or two or more polymers, and the first structural unit and a second structural unit selected from the group consisting of hexafluoropropylene, acrylic acid, maleic acid, ethyl methacrylate, and methyl methacrylate are included in structural units constituting the one or two or more polymers.

**23.** A production method for a battery member for a secondary batteries comprising:

forming an electrode mixture layer comprising an electrode active material and an ionic liquid on a current collector to obtain an electrode; and
disposing an electrolyte layer opposite to the current collector of the electrode,
wherein a porosity of the electrode mixture layer is controlled to 10% by volume or less relative the volume of the electrode mixture layer.

**24.** A production method for secondary batteries comprising:

forming a positive electrode mixture layer comprising a positive electrode active material and an ionic liquid on a first current collector to obtain a positive electrode;
forming a negative electrode mixture layer comprising a negative electrode active material and an ionic liquid on a second current collector to obtain a negative electrode; and
disposing an electrolyte layer between the positive electrode and the negative electrode in such a way that the electrolyte layer is positioned on the positive electrode mixture layer side of the positive electrode and on the negative electrode mixture layer side of the negative electrode,
wherein a porosity of the positive electrode mixture layer is controlled to 10% by volume or less relative to the

volume of the positive electrode mixture layer, and a porosity of the negative electrode mixture layer is controlled to 10% by volume or less relative to the volume of the negative electrode mixture layer.

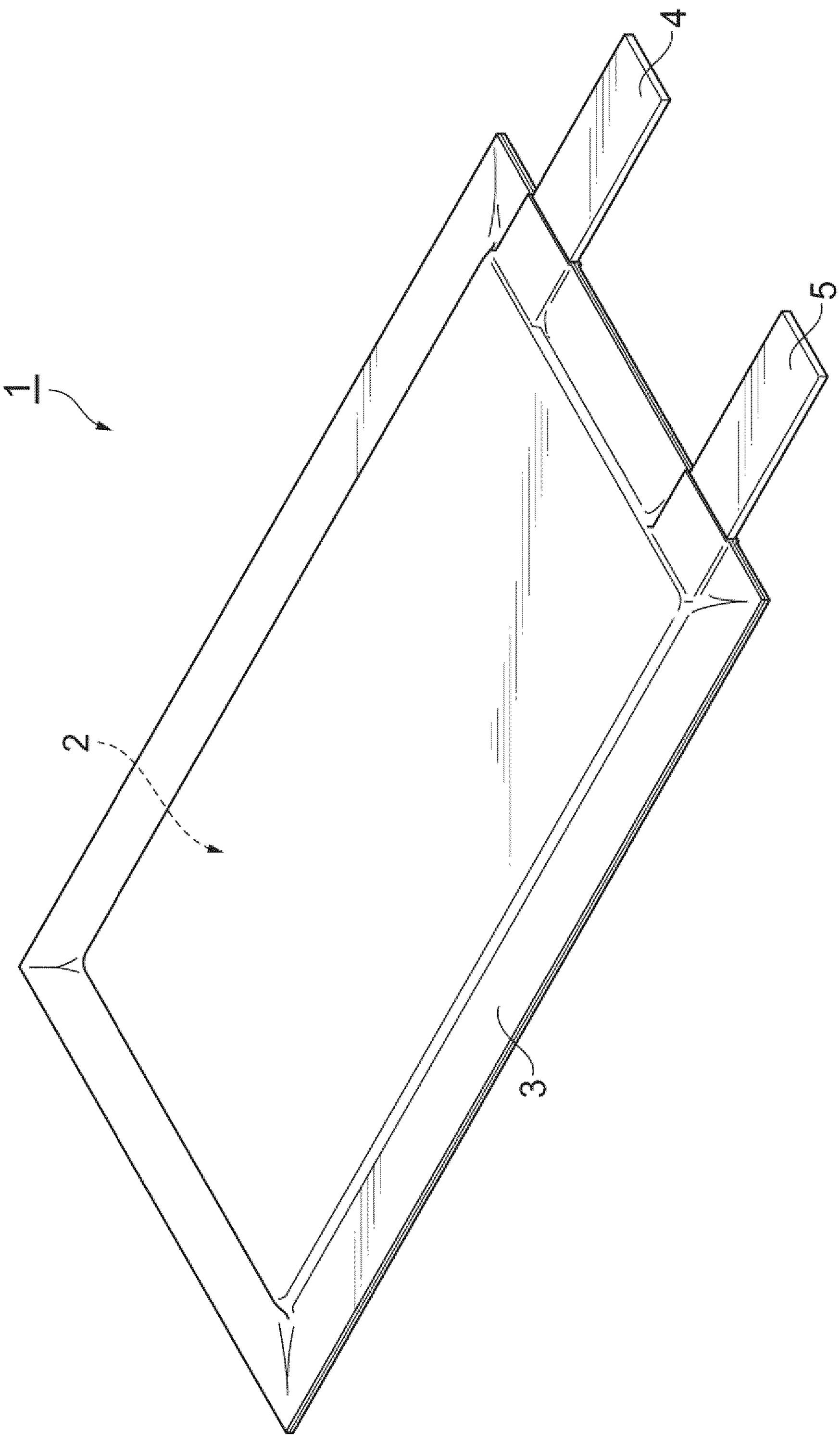


Fig.1

*Fig.2*

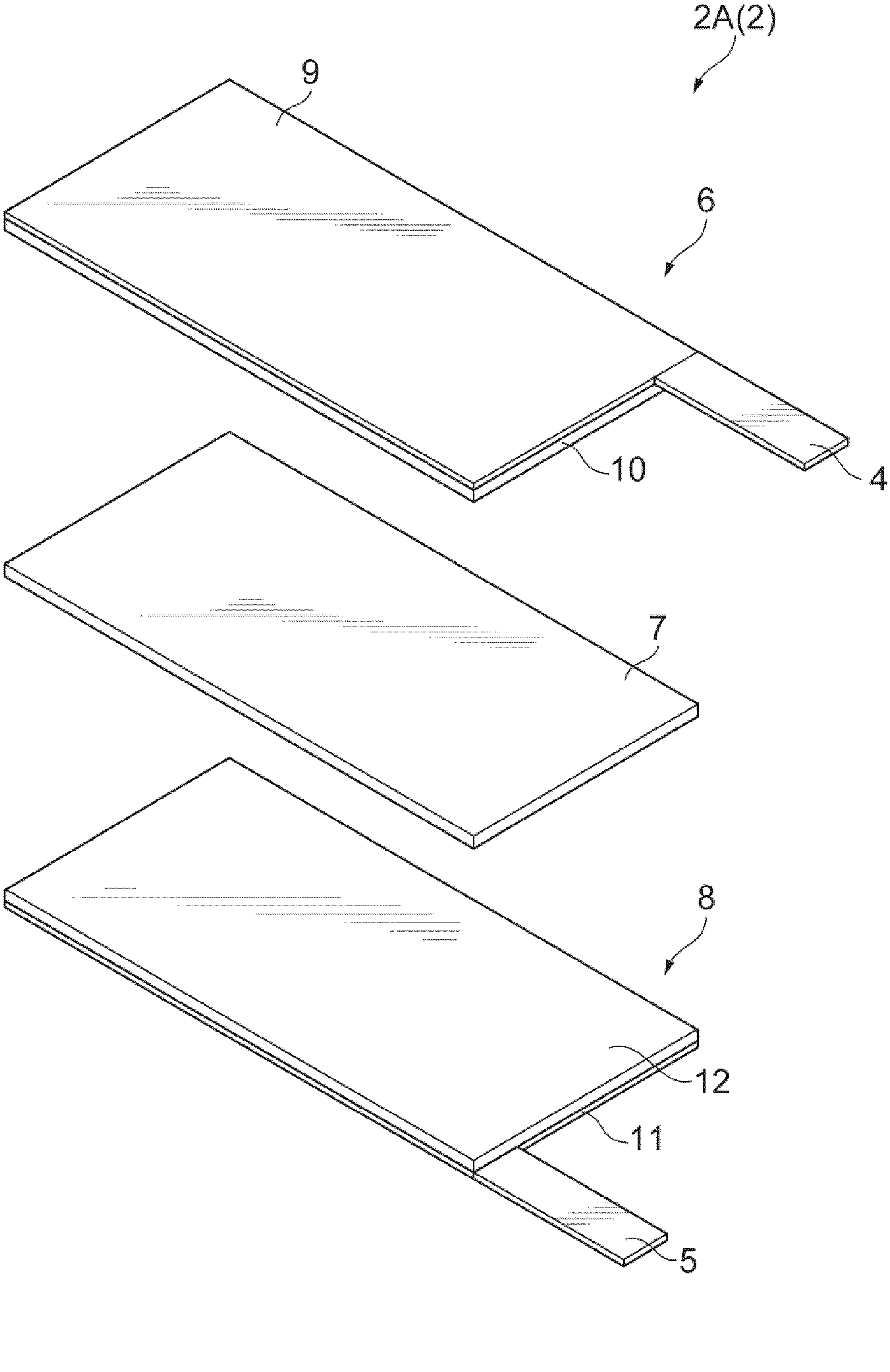

*Fig.3*

(a)

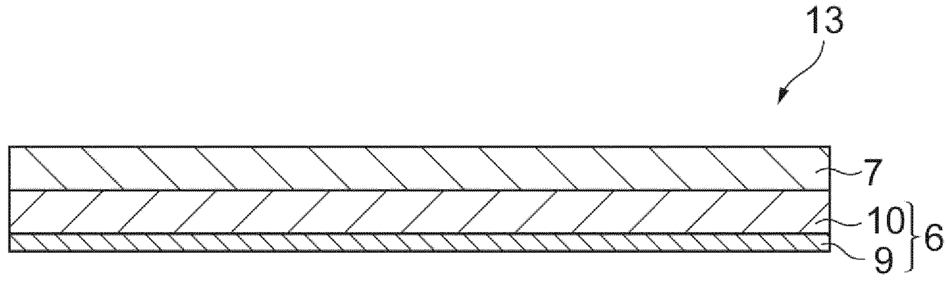


(b)

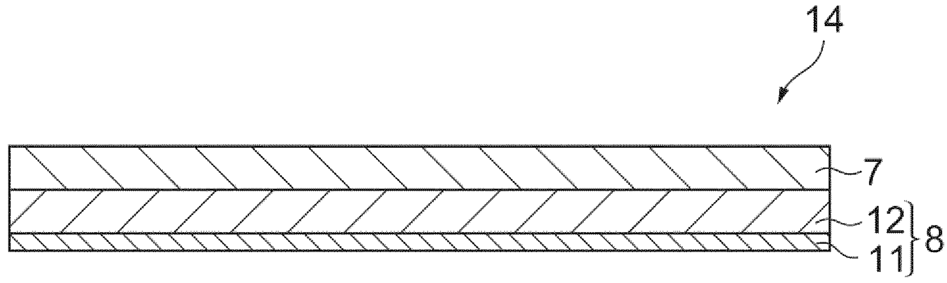

Fig.4

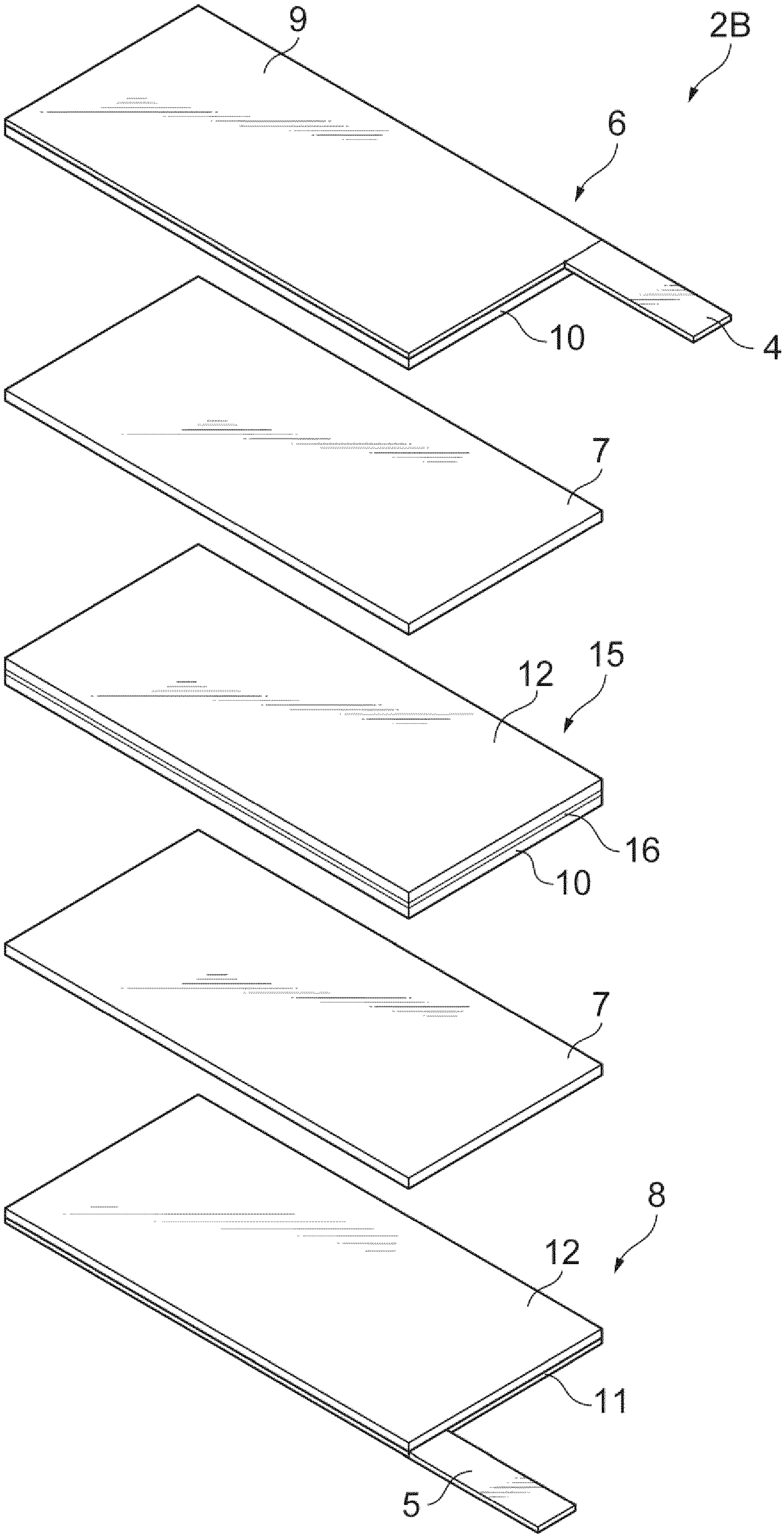

*Fig.5*

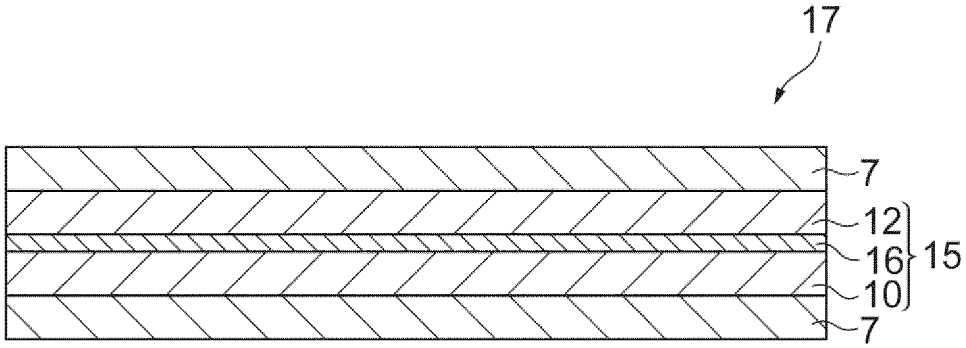

## INTERNATIONAL SEARCH REPORT

International application No. PCT/JP2018/016298

A. CLASSIFICATION OF SUBJECT MATTER
Int.Cl. H01M4/62(2006.01)i, H01M4/13(2010.01)i, H01M10/0565(2010.01)i

According to International Patent Classification (IPC) or to both national classification and IPC

B. FIELDS SEARCHED

Minimum documentation searched (classification system followed by classification symbols)
Int.Cl. H01M4/62, H01M4/13, H01M10/0565

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2011-129400 A (KONICA MINOLTA HOLDINGS, INC.) 30 June 2011, claims 1-6, paragraphs [0023]-[0025], [0027]-[0034], [0037]-[0040], [0045]-[0047] (Family: none) | 1-24<br>1-24 |
| Y | JP 2006-120517 A (GS YUASA CORPORATION) 11 May 2006, claims 1-7, paragraphs [0006], [0017]-[0019] (Family: none) | 1-24 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 July 2018 (06.07.2018) | 17 July 2018 (17.07.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2018/016298

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2012-518248 A (CENTRE NATIONAL DE LA RECHERCHE SCIENTIFIQUE) 09 August 2012, claims 1-9, paragraphs [0010]-[0026] & US 2012/0021279 A1, claims 1-9, paragraphs [0023]-[0049] & WO 2010/092258 A1 & FR 2942235 A & CN 102405542 A | 1-5, 13-15, 23, 24 |
| Y | JP 2008-243736 A (ARISAWA MANUFACTURING CO., LTD.) 09 October 2008, claims 1-12, paragraphs [0034]-[0044], fig. 2, 3 (Family: none) | 1-5, 13-15, 23, 24 |
| Y | JP 2010-153375 A (SUMITOMO CHEMICAL CO., LTD.) 08 July 2010, claims 1-3, paragraphs [0018]-[0027] & US 2011/0292568 A1, claims 1-3, paragraphs [0023]-[0033] & WO 2010/061965 A1 & EP 2362468 A1 & CN 102227837 A & KR 10-2011-0089870 A | 1-5, 13-15, 23, 24 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006294326 A